# EUROPÄISCHE PATENTSCHRIFT

(11) **EP 3 020 638 B1**
(45) Veröffentlichungstag und Bekanntmachung des Hinweises auf die Patenterteilung: **19.07.2017**
(21) Anmeldenummer: 15000786.2
(22) Anmeldetag: 17.03.2015
(51) Int. Cl.: B64D 15/12

(54) **VORRICHTUNG UND VERFAHREN ZUR ENTEISUNG UND/ODER VERMEIDUNG VON EISBILDUNG SOWIE PROFILKÖRPER UND LUFTFAHRZEUG MIT EINER SOLCHEN VORRICHTUNG**
DEVICE AND METHOD FOR DE-ICING AND/OR AVOIDING ICE-BUILDUP AND PROFILED BODY AND AIRCRAFT EQUIPPED WITH SUCH A DEVICE
DISPOSITIF ET PROCÉDÉ DE DÉGIVRAGE ET/OU DE PRÉVENTION CONTRE LA FORMATION DE GLACE AINSI QUE CORPS PROFILÉ ET AÉRONEF DOTÉS D'UN TEL DISPOSITIF

(30) Priorität: 11.11.2014 BR 102014028159
(43) Veröffentlichungstag der Anmeldung: 18.05.2016
(73) Patentinhaber: Airbus Defence and Space GmbH, 85521 Ottobrunn (DE)
(72) Erfinder: Strobl, Tobias, 80333 München (DE); Storm, Stefan, 85716 Unterschleißheim (DE); Raps, Dominik, 86633 Neuburg (DE); Hauk, Tobias, 82008 Unterhaching (DE)
(74) Vertreter: Kastel, Stefan

(56) Entgegenhaltungen:
- CH-A- 233 496
- DE-A1- 2 203 642
- DE-B- 1 244 588
- US-A- 5 921 502

## Beschreibung

Die Erfindung betrifft einen aerodynamischen Profilkörper für ein Luftfahrzeug, wie z.B. einen Flügel oder einen Teil eines Flügels, einen Triebwerkseinlauf oder eine Flosse eines Leitwerks mit einer Vorrichtung zur Enteisung und/oder Vermeidung von Eisbildung, mit einer Wärmeabgabeeinrichtung zur Abgabe von Wärme an einem Oberflächenbereich des Luftfahrzeuges. Weiter betrifft die Erfindung ein Luftfahrzeug mit einem solchen Profilkörper. Schließlich betrifft die Erfindung ein Verfahren zur Enteisung eines Oberflächenbereichs eines Luftfahrzeugs und/oder Vermeidung von Eisbildung an dem Oberflächenbereich des Luftfahrzeuges, durch Einbringung von Wärmeenergie an dem Oberflächenbereich.

Eis bildet sich an exponierten Stellen von Luftfahrzeugen wie Vorderkanten von Flügeln, Leitwerken, horizontalen Stabilisatoren oder auch Triebwerkseinläufen, wenn das Luftfahrzeug, wie beispielsweise ein Flugzeug, durch eine Wolke fliegt, die unterkühlte Wassertröpfchen enthält oder Tropfen/Feuchtigkeit auf eine unterkühlte Luftfahrzeugstruktur treffen. Wenn eine Eisschicht wächst, beeinträchtigt sie die Luftströmung über der betroffenen Oberfläche. Wenn die Schicht groß genug wird, können z.B. Tragprobleme oder Handhabungsprobleme für das Luftfahrzeug entstehen.

Es sind bereits Eisschutzsysteme bei Luftfahrzeugen im Einsatz, um eine solche Eisbildung zu vermeiden. Die meisten Eisschutzsysteme sind als Anti-Eissysteme zum Vermeiden einer Eisbildung ausgebildet. Hierzu sind in der Regel Strukturintegrierte Heizsysteme vorgesehen. Während des Fluges unter Vereisungsbedingungen werden Flügelkanten z. B. mit heißer Abzweigluft oder Verdichterzapfluft (sog. bleed air) oder durch elektrische Heizungen in den Flügelkanten beheizt. Zudem sind, vor allem in kleineren Flugzeugen, pneumatisch betriebene Enteisungsvorrichtungen im Einsatz, welche an der Flügelvorderkante integrierte Gummimatten bzw. Gummischläuche in regelmäßigen Abständen aufblasen, wodurch ein Ablösen von angelagertem Eis erzielt wird.

Dabei sind die herkömmlichen Enteisungsmaßnahmen mit einem hohen energetischen Aufwand während des Fluges verbunden. An energetischem Aufwand für das Freimachen von Oberflächen des Luftfahrzeuges von Eis fallen etwa 240 bis 260 kW an Abzweigluftleistung oder ca. 130 bis 150 kW elektrischer Heizleistung für eine zu enteisende Fläche von ca. 12 bis 15 m² an. Diese Daten entsprechen im Falle von Abzweigluft Flächenleistungen von ca. 18,5 kW/m² bzw. etwa 10 kW/m² bei elektrischer Heizung.

Bekannte Systeme oder Vorrichtungen zur Entfernung von Eisakkumulationen im Flug auf aerodynamisch effizienten Oberflächen lassen sich generell unterteilen in pneumatische, thermische und mechanische Enteisungssysteme. So ist in der EP 0 658 478 B1 eine Vorrichtung zur pneumatischen Enteisung von Oberflächen an Luftfahrzeugen bekannt. Aus der US 6 702 233 B1 ist eine Vorrichtung zur Enteisung beziehungsweise Vermeidung von Eisbildung an Oberflächenbereichen von Luftfahrzeugen unter Verwendung von warmer Abzweigluft aus dem Triebwerk bekannt.

Aus der DE 10 2010 045 450 B4 ist eine Anordnung zur Enteisung eines Oberflächenbereichs eines Luftfahrzeuges durch Bestrahlung des Oberflächenbereichs mit einem Laser bekannt.

US 5 921 502 A offenbart ein Enteisungssystem mit einer Warmluftabgabeeinrichtung und mechanischen Aktoren zum Enteisen von rauheitsempflindlichen Strömungsprofilen.

CH 233 496 A offenbart ein Metallluftschraubenblatt mit einer Heizvorrichtung. Die Wärme wird durch einen elektrischen Widerstandsheizkörper erzeugt. Der Heizkörper ist als langgestreckter Draht ausgebildet und entlang der Eintrittskante des Schraubenblattes in eingebettet.

DE 22 03 642 A1 offenbart eine elektrische Heizeinrichtung, bei der ein elektrisches Heizelement in einer Nut angeordnet ist. Die Nut ist in einem wärmeleitenden Metall-Block vorgesehen. Das Heizelement ist in thermischem Kontakt, d.h. wärmeleitender Berührung, mit dem Metall-Block in der Nut angeordnet. Die Befestigung wird durch Verengen oder Zusammendrücken des Nutmauls erhalten.

DE 12 44 588 B offenbart eine Vorrichtung zum Enteisen eines angeströmten profilierten Bauelements mit einer Heizeinrichtung zum Erwärmen der Anströmkante des Bauelements. Das Bauelement verjüngt sich hinter der Anströmkante und erweitert sich anschließend derart, dass das Bauelement stufenlos in die unabhängig von Enteisungsgesichtspunkten gewählte Profilgestalt des Bauelements übergeht.

Andere Vorrichtungen zur Enteisung und/oder Vermeidung von Eisbildung verwenden eine thermische Enteisung unter Verwendung von elektrischen Heizelementen. Insbesondere ist es bekannt, basierend auf der großflächigen Wärmezufuhr durch eine elektrothermische Heizmatte das Vereisen der Oberfläche eines Flügelprofils zu verhindern. Ein Beispiel für ein derartiges thermisches Enteisungssystem ist in der EP 1 017 580 B1 beschrieben.

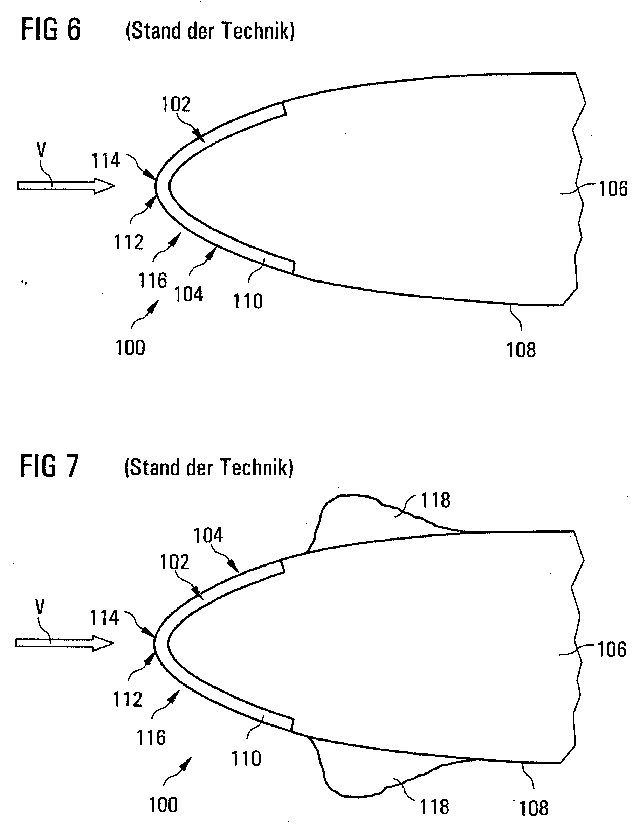

Im folgenden wird die Wirkweise einer derartigen bekannten Vorrichtung zur Enteisung und/oder Vermeidung von Eisbildung für ein Luftfahrzeug, welche die Merkmale des Oberbegriffs des beigefügten Anspruchs 1 aufweist, anhand der Darstellungen in den Figuren 6 und 7 näher erläutert.

Die Figuren 6 und 7 zeigen einen aerodynamischen Profilkörper 108, wie beispielsweise einen Flügel eines als Flugzeug ausgebildeten Luftfahrzeuges mit einer bekannten Vorrichtung 100 zur Enteisung und/oder Vermeidung von Eisbildung, welche Vorrichtung 100 mit einer Wärmeabgabeeinrichtung 102 zur Abgabe von Wärme an einen Oberflächenbereich 104 des Luftfahrzeuges 106 versehen ist. Die Wärmeabgabeeinrichtung 102 weist eine großflächig an dem Oberflächenbereich 104 angeordnete Heizmatte 110 auf, die den gesamten Oberflächenbereich 104 aufheizt. So kann beispielsweise der gesamte um die Vorderkante 112 beziehungsweise um eine Stagnationslinie 114 herum liegende Oberflächenbereich 104 von Eis freigehalten werden.

Die Fig. 6 zeigt eine Prinzipskizze eines voll-evaporierend betriebenen, elektro-thermischen Enteisungssystems 116 als Beispiel für die bekannte Vorrichtung 100 zur Enteisung und/oder Vermeidung von Eisbildung, welches Enteisungssystem 116 mit einer Heizmatte 110 im Bereich der Vorderkante 112 eines Flügels zur großflächigen und vollständigen Verhinderung von Eisakkumulation durch auf der Oberfläche des Flügelprofils auftreffende Wassertropfen versehen ist.

Basierend auf der großflächigen Wärmezufuhr durch die elektro-thermische Heizmatte 110 kann das Vereisen der Oberfläche des Flügelprofils auf folgende zwei Möglichkeiten verhindert werden. Dabei wird davon ausgegangen, dass das elektro-thermische Enteisungssystem 116 permanent betrieben wird:
- Wie in der Fig. 6 dargestellt, werden die auf dem Flügelprofil - Profilkörper 108 - auftreffenden Wassertropfen im voll-evaporierenden Enteisungsmodus vollständig verdampft.
- Wie in Fig. 7 dargestellt, wird das Anhaften und Erstarren der Wassertropfen zu Eisakkumulationen an der Vorderkante 112 des Profils des Profilkörpers 108 durch einen "Running-wet"-Enteisungsmodus verhindert. Die Oberflächentemperatur der Vorderkante 112, welche aus dem Beheizen mittels dieses Enteisungsmodus resultiert, ist geringer als im voll-evaporierenden Enteisungsmodus. Dadurch wird das Erstarren der auftreffenden Wassertropfen zu Eis zunächst an der beheizten FlügelVorderkante 112 verhindert. Die Wassertropfen laufen am Flügelprofil des Profilkörpers 108 entlang in Richtung der Profilhinterkante und erstarren in weniger kritischen, nicht beheizten Bereichen auf dem Flügelprofil zu Eis 118.

Bei den bekannten elektro-thermischen Enteisungssystemen 116 muss daher entweder eine sehr hohe Energie aufgewandt werden, um den voll-evaporierenden Enteisungsmodus durchzuführen, oder es kommt bei geringerem Energieeinsatz zur Eisbildung an weniger kritischen nicht-beheizten Bereichen.

Weiter sind auch Vorrichtungen zur Enteisung und/oder Vermeidung von Eisbildung bekannt, die als hybride Vorrichtungen mehrere Möglichkeiten zur Enteisung, wie insbesondere den Einsatz thermischer Energie und mechanischer Verformungen nutzen. Beispiele von bekannten hybriden Enteisungssystemen sind aus den folgenden Literaturstellen bekannt:
- G. Fortin, M. Adomou, J. Perron, "Experimental Study of Hybrid Anti-Icing Systems Combining Thermoelectric and Hydrophobic Coatings", SAE International, Warrendale, Pa, 2011: Diese Publikation beschäftigt sich mit einem elektro-thermischen Anti-Eis-System in Kombination mit Eis abweisenden Oberflächenbeschichtungen zur Reduktion des Energiebedarfs bei der Enteisung. Die Wärmezufuhr erfolgt bei diesem System großflächig, um die gesamte, von Eisaufwuchs betroffene Oberfläche zu schützen. Der Nachteil des Systems ist somit die Tatsache, dass durch den permanenten Betrieb des großflächig anzubringenden Anti-Eis-Systems im Bereich der gesamten Flügelvorderkante ein grundsätzlich hoher Energieverbrauch auftritt.
- US 5 921 502 und US 2012/0091276 A1 sowie K. Al-Khalil, T. Ferguson, D. Phillips, "A Hybrid Anti-icing Ice Protection System", AIAA 97-0302 (1997): Diese Publikationen befassen sich mit einem hybriden Enteisungssystem der Firma Cox & Company, Inc. welches sich aus einem thermischen "Running-wet"-Anti-Eis-Subsystem sowie einem Subsystem auf Basis von elektro-expulsiven Aktuatoren (EMEDS) zusammensetzt. Das thermische Subsystem bedeckt den Bereich des Tropfenaufschlags an der Flügelvorderkante in großflächiger Weise entweder teilweise oder auch vollständig. Somit lässt sich für das thermische Subsystem der Nachteil anführen, dass ein relativ großer Flächenanteil des Flügelvorderkantenbereichs beheizt werden muss, um die Wassertropfen weiter stromabwärts zu transportieren. Dort können die zu einer Eisakkumulation erstarrten Tropfen dann mittels der EMEDS-Aktuatoren periodisch entfernt werden. Ein weiterer Nachteil des bekannten hybriden Systems ist zudem die Größe der EMEDS-Aktuatoren. Besonders nachteilig wirkt sich das mit EMEDS-Aktuatoren realisierte Enteisungssystem auf die elektromagnetische Verträglichkeit mit weiteren Systemen und Komponenten eines Luftfahrzeugs aus, da für die Impulsanregung der Aktuaroren kurzzeitig sehr hohe Ströme benötigt werden. Weiter erfordern diese kurzzeitig benötigten sehr höhen Ströme eine sogenannte ,Energy Storage Bank' (ESB), deren Gewicht sich äußerst nachteilig auf das des zu enteisenden Luftfahrzeugs auswirkt.
- Auch bei dem aus der US 6 283 411 B1 bekannten Enteisungssystem ist eine großflächige thermische Heizung mit einem voluminösen und schweren mechanischen Aktuator kombiniert.

Weiter wird zum technologischen Hintergrund auf folgende Dokumente [1] und [2] verwiesen:
[1] K. Al-Khalil, Effect of Mixed Icing Conditions on Thermal Ice Protection Systems, [April 15, 2013], http://www.coxandco.com/files/pdf/FAA-D9688.pdf.
[2] K. Al-Khalil, Thermo-Mechanical Expulsion Deicing System - TMEDS, [April 15, 2013], http://www.coxandco.com/files/pdf/AIAA-2007-0692.pdf.

Generell ist bei allen bekannten Systemen ein recht hoher Energieeinsatz zur Enteisung oder zur Vermeidung von Eisbildung notwendig.

Der Erfindung liegt daher die Aufgabe zugrunde, eine Vorrichtung und ein Verfahren zur Enteisung und/oder Vermeidung von Eisbildung zu schaffen, womit eine Enteisung und/oder eine Vermeidung von Eisbildung mit einem geringeren Energieaufwand ermöglicht ist.

Gemäß einem Aspekt schlägt die Erfindung einen Profilkörper mit den Merkmalen des Anspruches 1 vor. Ein solcher aerodynamischer Profilkörper kann beispielsweise ein Teil eines Tragflügels oder einer Flosse oder eines Triebwerkseinlauf eines Luftfahrzeuges sein. Ein mit einem derartigen Profilkörper versehenes Luftfahrzeug ist Gegenstand des Nebenanspruchs.

Gemäß einem weiteren Aspekt schlägt die Erfindung ein Verfahren zur Enteisung und/oder Vermeidung von Eisbildung für ein Luftfahrzeug mit den Schritten des weiteren Nebenanspruchs vor.

Vorteilhafte Ausgestaltungen der Erfindung sind Gegenstand der Unteransprüche.

Ein Vorteil der Erfindung ist, dass eine Vorrichtung und ein Verfahren zur Enteisung eines Oberflächenbereichs eines Luftfahrzeugs und/oder Vermeidung von Eisbildung an dem Oberflächenbereich des Luftfahrzeuges durch zielgerichtete Einbringung von Wärmeenergie an einem definierten Oberflächenbereich geschaffen werden.

Ein besonderer Vorteil bevorzugter Ausgestaltungen der Erfindung liegt darin, eine Vorrichtung und ein Verfahren zur Enteisung und/oder Vermeidung von Eisbildung zu schaffen, womit eine Enteisung und/oder Vermeidung von Eisbildung ermöglicht ist, die eine elektromagnetische Verträglichkeit der Enteisungsvorrichtung und den Systemen des Luftfahrzeugs gewährleistet. Ein wesentlicher Vorteil derartiger Ausgestaltungen gegenüber bekannten Systemen ist, ohne kurzzeitig hohe Ströme für eine Impulsanregung der Oberfläche eines zu enteisenden Profilkörpers auszukommen.

Gemäß einem ersten Aspekt schafft die Erfindung einen aerodynamischen Profilkörper für ein Luftfahrzeug mit einer Vorrichtung zur Enteisung und/oder Vermeidung von Eisbildung für ein Luftfahrzeug, mit einer Wärmeabgabeeinrichtung zur zielgerichteten Abgabe von Wärme an einem definierten Oberflächenbereich des Luftfahrzeuges, wobei die Wärmeabgabeeinrichtung zur linienförmigen Wärmeabgabe zwecks Erzeugung einer Sollbruchstelle oder Sollbruchlinie in sich auf dem Oberflächenbereich ansammelndem Eis ausgebildet ist, und mit einer Verformungseinrichtung zur Verformung zumindest eines Teils der Oberfläche des Oberflächenbereichs, wobei die Wärmeabgabeeinrichtung eine Wärmequelle umfasst, die von einer Isolierummantelung eingefasst ist, die ausgebildet ist, ein Abstrahlen von Wärme in den Innenbereich des Profilkörpers zu verringern oder zu verhindern.

Vorzugsweise ist die Wärmeabgabeeinrichtung derart ausgebildet, dass sie Wärme in einem definierten linienförmigen Wärmeabgabebereich mit einer Linienbreite im Bereich von 0,2 mm bis 4 mm, vorzugsweise 0,5 mm bis 1,5 mm und am meisten bevorzugt etwa 1,0 mm oder etwa 0,8 mm oder im Bereich von etwa 0,8 mm bis etwa 1,0 mm abgibt.

Vorzugsweise erstreckt sich der linienförmige Wärmeabgabebereich mit seiner Längsrichtung entlang der Staupunktslinie eines zu enteisenden oder von Eis frei zu haltenden Profilkörpers des Luftfahrzeugs. Vorzugsweise liegt die Staupunktslinie im Wesentlichen mittig innerhalb des linienförmigen Wärmeabgabebereichs. Es ist bevorzugt, dass die Anbindung der Wärmeabgabeeinrichtung an der Innenseite der Oberfläche des Profilkörpers durch eine stoffschlüssige Verbindung, insbesondere eine Klebeverbindung, ausgeführt ist. In bevorzugter Gestaltungsweise weist die Verbindung, wie insbesondere Klebeverbindung, um den Staupunkt des Profilkörpers eine Länge in einem Bereich zwischen 0,5 mm und 1,5 mm, und in einer explizit guten Gestaltungsweise eine Länge von 0.8 mm auf. Die Dicke der Klebeverbindung weist in bevorzugter Gestaltungsweise 0.2 mm auf. Die Wärmeabgabeeinrichtung weist eine linienförmige Wärmequelle auf. In bevorzugter Gestaltungsweise ist die Isolierummantelung aus beispielsweise Kapton ausgeführt, welches eine geringe Wärmeleitfähigkeit und somit eine gute Isolierwirkung aufweist. In einer alternativen Gestaltungsweise kann die Isolierummantelung auch aus einem anderen stark wärmeisolierenden Material oder mehreren verschiedenen stark wärmeisolierenden Materialien ausgeführt sein.Weiter wird durch die Isolierummantelung der Wärmequelle eine Bündelung der Wärmeabgabe innerhalb der Ummantelung erreicht, wodurch die Wärme linienförmig in die Oberfläche des Profilkörpers eingebracht werden kann. Der dadurch erzeugte Effekt des Wärmestaus bringt zusätzlich eine Energiereduktion mit sich. Die Isolierummantelung weist vorzugsweise zum Bilden der Wärmeabgabelinie eine linienförmige Aussparung auf.

Es ist bevorzugt, dass die Vorrichtung als hybride Vorrichtung zur Enteisung und/oder Vermeidung von Eisbildung mittels thermischer und mechanischer Energie ausgebildet ist. Die Vorrichtung umfasst eine Verformungseinrichtung zur Verformung zumindest eines Teils der Oberfläche des Oberflächenbereichs. Die Wärmeabgabeeinrichtung weist wenigstens eine längliche Wärmequelle und eine Isolierummantelung für die Wärmequelle zum Vermeiden einer Wärmeabstrahlung an einem anderen Bereich als einer Wärmeabgabelinie auf. Es ist bevorzugt, dass die Verformungseinrichtung wenigstens einen piezoelektrischen Aktuator oder eine Anordnung von piezoelektrischen Aktuatoren zur Verformung einer Oberfläche des Oberflächenbereichs aufweist.

In einer weiteren bevorzugten Ausgestaltung kann die Verformungseinrichtung wenigstens einen Inertialkraftgenerator oder einen Inertialmassenschwinger aufweisen. Der Inertialkraftgenerator bzw. Inertialmassenschwinger kann zusätzlich oder alternativ zu dem wenigstens einen piezoelektrischen Aktuator vorgesehen sein.

Es ist bevorzugt, dass die Wärmeabgabeeinrichtung eine Isolierummantelung enthält, die eine flächig ausgereitete Wärmeabgabe durch die Wärmequelle wie z.B. den Heizdraht in die Oberfläche des Profilkörpers verhindert Es ist bevorzugt, dass die Wärmeabgabeeinrichtung eine Isolierummantelung enthält, die das Abstrahlen der Wärmeabgabe durch den Heizdraht in den Innenbereich des Profilkörpers verhindert, um einen Wärmestau zu generieren,der linienförmig in die Oberfläche des Profilkörpers eingeleitet wird

Es ist bevorzugt, dass eine Eisdetektionseinrichtung vorgesehen ist, die ausgebildet ist, anhand von durch die Wärmeabgabeeinrichtung und/oder durch wenigstens einen Aktuator erhaltenen Informationen eine Akkumulation von Eis zu detektieren.

Es ist bevorzugt, dass der wenigstens eine piezoelektrische Aktuator als d₃₃-Stapelaktuator ausgebildet ist

Vorzugsweise ist die Ausdehungsrichtung des wenigstens einen Aktuators, insbesondere des wenigstens einen piezoelektrischen Aktuators bei Verwendung an einem Profil eines Flügels in Spannweitenrichtung ausgerichtet. Insbesondere ist die Ausdehnungsrichtung mit zumindest einer Richtungskomponente in Richtung der Wärmeabgabelinie ausgerichtet.

Es ist bevorzugt, dass die Piezoaktuatoren und/oder der Heizdraht bzw. das Heizelement zur Detektion von Eisakkumulationen auf der Oberfläche verwendet werden können. Hierzu ist insbesondere eine Detektionseinrichtung vorgesehen, die anhand von mit diesen Elementen erhaltenen Parametern erfassen kann, ob eine Akkumulation von Eis vorliegt.

Die Wärmeabgabeeinrichtung der erfindungsgemäßen Vorrichtung ist zur Wärmeabgabe in Linienform ausgebildet, um so eine Sollbruchstelle oder Sollbruchlinie von sich auf dem Oberflächenbereich ansammelndem Eis zu erzeugen. Die Wärmeabgabeeinrichtung ist somit zur Wärmeabgabe entlang einer Wärmeabgabelinie ausgebildet. Je nach Energieeinsatz bildet sich entlang der Wärmeabgabelinie eine Schwächung von darauf befindlichem Eis aus, so dass das Eis aufgebrochen werden kann, oder es bildet sich entlang der Wärmeabgabelinie erst gar kein Eis aus, so dass sich allenfalls Eis an durch die Wärmeabgabelinie getrennten Abschnitten des Oberflächenbereichs ausbilden kann. Die Wärmeabgabelinie hat dabei vorzugsweise eine möglichst geringe Erstreckung in Breitenrichtung. Die Linienbreiten sollte z.B. maximal 5 mm betragen, bevorzugt ist eine wesentlich schmalere Wärmeabgabelinie im Bereich von 0,2 mm bis 3 mm, mehr bevorzugt im Bereich von 0,5 mm bis 1,5 mm und am meisten bevorzugt etwa 0,8 mm. Wärme wird gezielt linienförmig mit minimaler Breitenerstreckung abgegeben. Es reicht ein Aufbrechen des Eises aus; verbleibende Eisreste lassen sich energieeffizient mechanisch entfernen.

Bei einer besonders bevorzugten Ausgestaltung der erfindungsgemäßen Vorrichtung weist die Verformungseinrichtung eine erste Verformungseinheit auf einem ersten Abschnitt des Oberflächenbereichs und eine zweite Verformungseinheit auf einer durch die Wärmeabgabelinie von dem ersten Abschnitt getrennten zweiten Oberflächenbereich auf.

Bevorzugt umfasst die Verformungseinrichtung eine erste Verformungseinheit auf einer ersten Seite von einer Wärmeabgabelinie der Wärmeabgabeeinrichtung, zur Verformung eines auf der ersten Seite befindlichen ersten Abschnitts des Oberflächenbereichs und eine zweite Verformungseinheit auf der zweiten Seite von der Wärmeabgabelinie zur Verformung eines auf der zweiten Seite befindlichen zweiten Abschnitts des Oberflächenbereichs.

In einer besonders bevorzugten Ausgestaltung umfasst die Vorrichtung eine Eisadhäsionskräfte herabsetzende Oberflächenbeschichtung für den Oberflächenbereich.

Es ist bevorzugt, dass die Wärmeabgabeeinrichtung als linienförmige Wärmequelle wenigstens einen Heizdraht und/oder wenigstens einen piezoelektrischen Aktuator, der derart ausgebildet und eingerichtet ist, dass er zur linienförmigen Wärmeabgabe fähig ist, aufweist.

Es ist bevorzugt, dass die Wärmequelle der Wärmeabgabeeinrichtung von einer Isolierummantelung eingefasst wird, um das Abstrahlen von Wärme in den Innenbereich des Profilkörpers zu verhindern und/oder um einen Wärmestau zu erzeugen, mittels dessen linienförmig Wärme in die Oberfläche des Profilkörpers eingebracht werden kann.

Eine bevorzugte Ausgestaltung des Profilkörpers ist bevorzugt dadurch gekennzeichnet, dass die Wärmeabgabeeinrichtung zur linienförmigen Wärmeabgabe zwecks Erzeugung einer Sollbruchstelle oder Sollbruchlinie entlang einer oder nahe einer Stagnationslinie des Profilkörpers und/oder entlang einer Vorderkante des Profilkörpers ausgebildet ist.

Auch bei dem Profilkörper ist bevorzugt, dass eine Verformungseinrichtung vorgesehen ist, mittels der wenigstens ein Teil eines die Stagnationslinie und/oder die Vorderkante des Profilkörpers einschließenden Oberflächenbereichs des Profilkörpers zum Entfernen von Eis verformbar ist.

Besonders bevorzugt weist die Verformungseinrichtung die erste Verformungseinheit zur Verformung des ersten Abschnitts und die zweite Verformungseinheit zur Verformung des zweiten Abschnitts des Oberflächenbereichs auf, wobei die Abschnitte vorzugsweise durch die Stagnationslinie und/oder die Vorderkante des Profilkörpers voneinander getrennt sind.

Es ist bevorzugt, dass ein die Stagnationslinie und/oder die Vorderkante des Profilkörpers einschließender Oberflächenbereich mit einer Eisadhäsionskräfte herabsetzenden Oberflächenbeschichtung versehen ist.

Es ist bevorzugt, dass der Oberflächenbereich mit einer nanostrukturierten Oberfläche und/oder einer hydrophoben Oberfläche, insbesondere einer super-hydrophoben Oberfläche, versehen ist. Gemäß einem weiteren Aspekt wird ein Luftfahrzeug mit einem aerodynamischen Profilkörper gemäß dem weiteren Aspekt der Erfindung oder dessen vorteilhaften Ausgestaltungen geschaffen.

Gemäß einem weiteren Aspekt schafft die Erfindung ein Verfahren zur Enteisung eines Oberflächenbereichs eines Luftfahrzeugs und/oder zur Vermeidung von Eisbildung an dem Oberflächenbereich des Luftfahrzeuges, durch Einbringung von Wärmeenergie an dem Oberflächenbereich entlang einer Linie an dem Oberflächenbereich, um eine Sollbruchlinie oder Trennlinie in sich an dem Oberflächenbereich ansammelndem Eis bzw. sich dort akkumulierenden Wassertropfenansammlungen zu bilden und durch Verformen des Oberflächenbereichs, um Eis entlang der Sollbruchlinie aufzubrechen und/oder um entlang der Sollbruchlinie aufgebrochenes Eis und/oder um sich akkumulierende Wassertropfen zu entfernen, wobei bei der Einbringung von Wärme ein Abstrahlen von Wärme in den Innenbereich des Profilkörpers durch eine Isolierummantelung verringert oder verhindert wird.

Bevorzugt ist ein Verfahren zur Enteisung eines Oberflächenbereichs eines Luftfahrzeugs und/oder Vermeidung von Eisbildung an dem Oberflächenbereich des Luftfahrzeuges, durch zielgerichtete Einbringung von Wärmeenergie an einem definierten Oberflächenbereich, gekennzeichnet durch Einbringung von Wärme entlang einer Linie an dem Oberflächenbereich, um eine Sollbruchlinie oder Trennungslinie in sich an dem Oberflächenbereich ansammelndem Eis oder in sich an dem Oberflächenbereich akkumulierenden Wassertropfenansammlungen zu bilden.

Eine bevorzugte Ausgestaltung des Verfahrens umfasst ferner den Schritt:
Verformen des Oberflächenbereichs - insbesondere mittels Piezo-Aktuatoren -, um Eis entlang der Sollbruchlinie aufzubrechen und/oder um entlang der Sollbruchlinie aufgebrochenes Eis und/oder um sich akkumulierende Wassertropfen zu entfernen.

Eine weitere bevorzugte Ausgestaltung des Verfahrens umfasst den weiteren Schritt:
Versehen oder Vorsehen des Oberflächenbereichs mit einer Eisadhäsionskräfte herabsetzenden Oberflächenbeschichtung und/oder einer Eisadhäsionskräfte herabsetzenden Oberflächenbeschaffenheit.

Der Erfindung liegt die Idee zugrunde, Wärme entlang einer Wärmeabgabelinie an einem zu enteisenden oder von Eis freizuhaltenden Oberflächenbereich abzugeben. Vorzugsweise wird Wärme entlang oder in der Nähe einer Stagnationslinie oder Staupunktslinie abgegeben. Hierdurch, und in besonders bevorzugter Ausgestaltung durch eine isolierende Ummantelung einer Wärmequelle einer zur linienförmigen Wärmeabgabe ausgebildetene Wärmeabgabeeinrichtung, lässt sich mit relativ geringem Energieeintrag eine Sollbruchlinie oder eine Trennungslinie zwischen sich dennoch akkumulierenden Wassertropfenansammlungen oder Eisansammlungen schaffen. Die jeweils jenseits der Wärmeabgabelinie einsetzenden Eisansammlungen können so einfacher entfernt werden.

Besonders bevorzugt ist die Vorrichtung als hybrides Enteisungssystem ausgebildet. Die als hybrides Enteisungssystem ausgebildete Vorrichtung ermöglicht eine besonders energie-effiziente Enteisung von im Flug akkumuliertem Eis.

In einer bevorzugten Ausgestaltung der Vorrichtung wird.eine Hybridisierung erreicht durch
a) gezielten Einsatz thermischer Energie - insbesondere durch einen Heizdraht, mehr insbesondere durch einen von einer Isolierummantelung (zum Großteil, mit Ausnahme einer Aussparung zum Bilden der Wärmeabgabelinie) umfassten Heizdraht oder eine sonstige zur linienförmigen Wärmeabgabe geeigneten Wärmequelle - gekoppelt mit
b) einer Verformung der zu enteisenden Oberfläche - vorzugsweise durch einen oder mehrere piezoelektrische Aktuatoren und/oder einen oder mehrere Inertialkraftgeneratoren oder Inertialmassenschwinger- besonders bevorzugt weiter in Kombination mit
c) einer Eisadhäsionskräfte herabsetzenden Oberflächenbeschichtung - zum Beispiel mittels einer nanostrukturierten, superhydrophoben Oberfläche, wie zum Beispiel mittels Hydrobead.

In besonders bevorzugter Ausgestaltung ist die Vorrichtung zur Enteisung und/oder Vermeidung von Eisbildung durch ein hybrides System gebildet, welches durch eine Kombination von drei Subsystemen aus elektro-thermischem System, mechanischem System sowie einer Oberflächenbeschichtung gebildet ist. Eine Kombination aller drei Maßnahmen hat sich als besonders energie-effizient und als effektivste Lösung herausgestellt.

Aber auch die Kombination der linienförmigen Wärmeabgabe mit nur einem der weiteren Subsysteme - mechanische Verformung oder Oberflächenbeschichtung - bietet gegenüber bekannten Enteisungssystemen bereits erhebliche Energievorteile.

Auch ist der Einsatz der linienförmigen Wärmeabgabe entlang einer vordefinierten Wärmeabgabelinie bereits alleine für sich zur Enteisung interessant.

Besonders bevorzugt ist zur Verformung des Oberflächenbereichs zwecks mechanischem Entfernen von sich ansammelndem Eis eine Piezoaktuatorik vorgesehen.

Besonders ist eine Kombination einer linienförmig Wärme abgebenden Wärmeabgabeeinrichtung - wie insbesondere mit Hilfe eines Heizdrahtes, der in besonders bevorzugter Gestaltung von einer Isolierummantelung umschlossen wird - mit einer entsprechenden Oberflächenverformung - wie insbesondere durch Piezoaktuatorik - interessant. Eine derartige Kombination ermöglicht, dass das mechanisch von der Oberfläche gelöste Eis nicht weiter durch aerodynamische Kräfte der Strömung an der Oberfläche angepresst wird, sondern insbesondere durch eine am Stagnationspunkt thermisch eingebrachte, punktuelle Sollbruchstelle (bei zweidimensionaler Betrachtung) beziehungsweise durch die an der Stagnationslinie thermisch eingebrachte, linienförmige Sollbruchstelle in Spannweitenrichtung (bei dreidimensionaler Betrachtung) vollständig entfernt wird.

Weitere Vorteile der erfindungsgemäßen Vorrichtung - insbesondere in einer Ausgestaltung als hybrides System - sind ein geringerer Bauraum sowie eine Reduktion des Gewichts der Vorrichtung.

Insbesondere wenn die Vorrichtung strukturell in einen Profilkörper, wie zum Beispiel einem Flügelprofil eines Luftfahrzeuges, integriert wird, sind keine bewegten Teile vorhanden, wodurch eine hohe Lebensdauer erwartet werden kann.

Weiter ist der Einsatz eines Heizdrahtes bevorzugt. Dieser hat auch hinsichtlich einer Sensorik Vorteile. Ein vorhandener Heizdraht kann auch als Temperatursensor verwendet werden.

Weiter kann die Bildung von Eis auf der Oberfläche des Profilkörpers, wie beispielsweise eines Flügelprofils, auch mittels piezoelektrischen Aktuatoren, die zum Verformen der Oberfläche vorhanden sind, z.B. durch Verschiebungen der Resonanzfrequenzen beziehungsweise durch veränderte Schwingungsmoden detektiert werden.

Insofern können die eingesetzten Heizelemente und Aktuatoren auch als Sensoren verwendet werden. Zusätzliche Sensoren sind somit entbehrlich; und es kann weiter Gewicht eingespart werden.

Ausführungsbeispiele der Erfindung werden nachfolgend anhand der beigefügten Zeichnungen näher erläutert. Darin zeigt:
- Fig. 1: eine schematische, teilweise weggeschnittene Darstellung eines Luftfahrzeuges am Beispiel eines Flugzeuges, wobei die Vorderkanten von aerodynamischen Profilkörpern des Luftfahrzeuges, wie insbesondere Tragflügel und Flossen des Leitwerks mit einer Vorrichtung zur Enteisung und/oder Vermeidung von Eisbildung versehen sind.
- Fig. 2: eine schematische, teils perspektivische, teils geschnittene Darstellung durch einen aerodynamischen Profilkörper, beispielsweise zum Bilden eines Tragflügels des Luftfahrzeugs von Fig. 1, gezeigt im Schnitt entlang der Linie II-II von Fig. 1, wobei der Profilkörper mit der Vorrichtung zur Enteisung und/oder Vermeidung von Eisbildung versehen ist.
- Fig. 3: in schematischer geschnittener Darstellung einen Schnitt durch die Vorderkante des Profilkörpers von Fig. 2 mit der Vorrichtung zur Enteisung und/oder Vermeidung von Eisbildung ohne Betrieb einer Wärmeabgabeeinrichtung; und
- Fig. 4: eine Darstellung wie in Fig. 3 bei Betrieb der Wärmeabgabeeinrichtung;
- Fig. 5: ein detaillierter Ausschnitt aus Fig. 3 oder insbesondere Fig. 4 bei Betrieb der Wärmeabgabeeinrichtung, die von einer Isolierummantelung eingefasst wird zur Vermeidung von Wärmeabgabe an den Innenbereich des Profilkörpers und insbesondere zur Erzeugung eines Wärmestaus innerhalb der Ummantelung für die zielgerichtete linienförmig einleitbare Wärmeabgabe in die Oberfläche des Profilkörpers;
- Fig. 6: eine Vorderkante eines Profilkörpers mit einer bekannten Vorrichtung zur Enteisung und/oder Vermeidung von Eisbildung in einem ersten Betriebsmodus; und
- Fig. 7: eine Darstellung vergleichbar zu Fig. 6, wobei die bekannte Vorrichtung in einem weiteren Betriebsmodus betrieben wird.

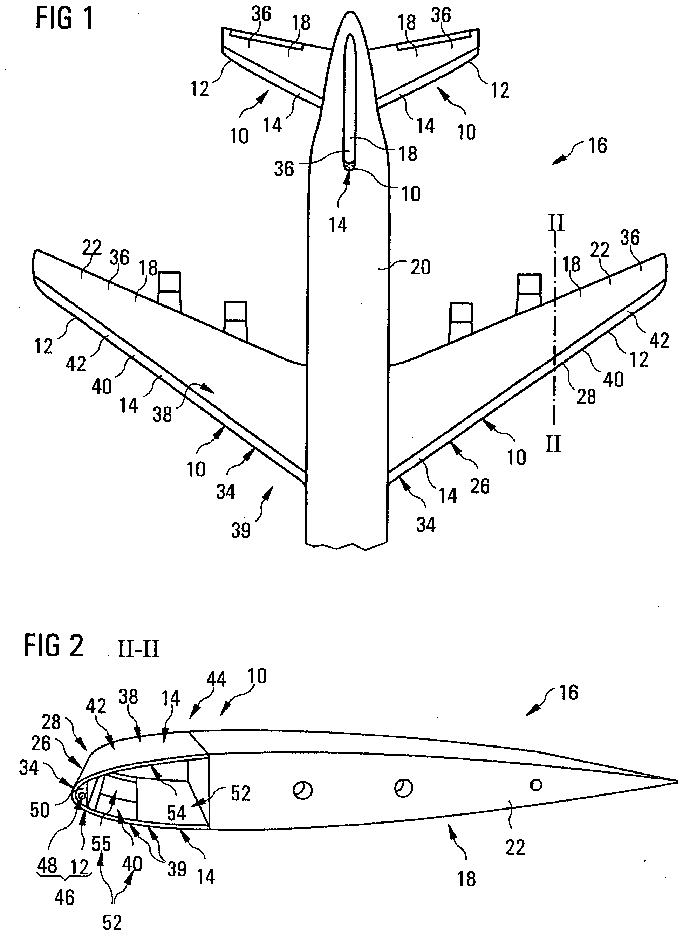

Im Folgenden wird eine Vorrichtung 10 zur Enteisung und/oder Vermeidung von Eisbildung an einem Oberflächenbereich 14 eines Luftfahrzeuges 16 anhand der Darstellung in den Fig. 1 und 2 näher erläutert.

Die Darstellungen in den Fig. 1 und 2 stellen lediglich Ausführungsbeispiele dar. Viele andere abweichende Ausgestaltungen der Vorrichtung 10 sind möglich.

Fig. 1 zeigt ein Luftfahrzeug 16 in Form eines Flugzeuges 20. Das Flugzeug 20 weist jeweils durch Profilkörper 18 gebildete Flügel 22, Leitwerksflossen 24, und Triebwerkseinläufe 25 auf. Im Bereich um die Vorderkanten 26 der Profilkörper 18 der Flügel 22 sowie der Leitwerksflossen 24 und der Triebwerkseinläufe 25 befindet sich der Oberflächenbereich 14, an dem sich im Flug Eis ansammeln kann.

Um dem entgegenzuwirken, weist das Luftfahrzeug 16 eine Vorrichtung 10 zur Enteisung und/oder Vermeidung von Eisbildung an dem jeweiligen Oberflächenbereich 14 auf. Die Vorrichtung 10 weist eine Wärmeabgabeeinrichtung 12 zur Abgabe von Wärme an den Oberflächenbereich 14 auf.

Anders als im zum Beispiel in den Fig. 6 und 7 gezeigten Stand der Technik ist die Wärmeabgabeeinrichtung 12 jedoch nicht zur großflächigen Wärmeabgabe ausgebildet, sondern zur linienförmigen Wärmeabgabe entlang einer Wärmeabgabelinie 28. Durch eine linienförmige Abgabe entlang der Wärmeabgabelinie 28 lässt sich an dem Oberflächenbereich 14 ansammelndes Eis 30 linienförmig schwächen und entlang der Wärmeabgabelinie 28 trennen. Insofern ist die Wärmeabgabeeinrichtung 12 zum Ausbilden einer Sollbruchstelle beziehungsweise einer Sollbruchlinie 32 für das Eis 30 ausgebildet.

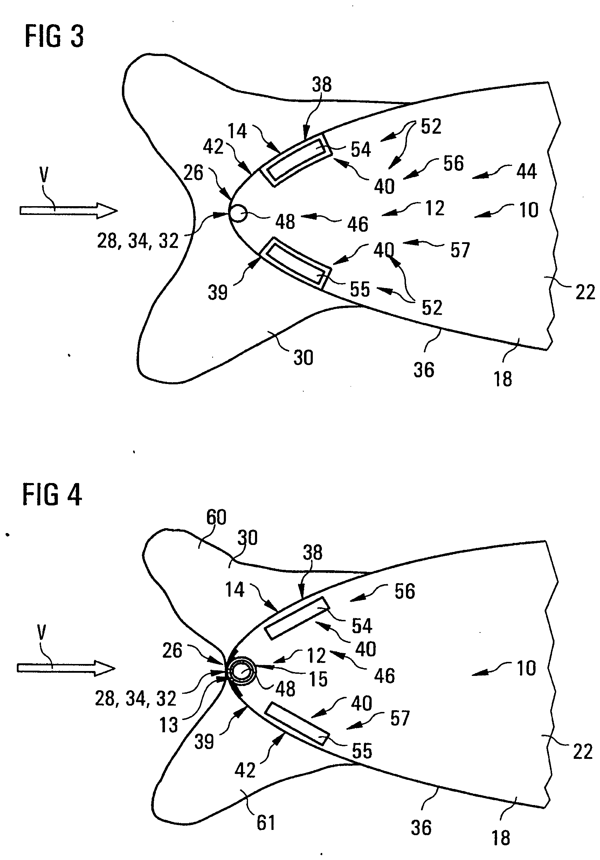

In bevorzugter Ausgestaltung ist die Wärmeabgabeeinrichtung 12 derart ausgebildet, dass die Wärme entlang der äußersten Vorderkante 26 und insbesondere entlang der Stagnationslinie 34 des jeweiligen aerodynamischen Profils 36 des jeweiligen Profilkörpers 18 linienförmig abgegeben wird. Die Stagnationslinie 34 ist die Linie, die die Staupunkte des aerodynamischen Profils 36 miteinander verbindet, oder mit anderen Worten diejenige Linie an einem aerodynamischen Profil 36, an der bei entsprechender Luftanströmung - in Fig. 3 und 4 dargestellt durch den Pfeil und den Geschwindigkeitsvektor v - in Strömungen zu den beiden Seiten beziehungsweise nach oben und nach unten hin aufgeteilt wird. Entlang der Stagnationslinie 34 baut sich im Flug der höchste Druck auf.

In bevorzugter Ausgestaltung weist die Wärmeabgabeeinrichtung 12 eine längliche Wärmequelle 13 auf. In weiter bevorzugter Ausgestaltung ist die Wärmequelle 13 von einer Isolierummantelung 15 umschlossen, welche die Wärmeabgabe in den Innenbereich des Profilkörpers 18 verhindert und zudem einen Wärmestau innerhalb der Isolierummantelung 15 generiert, wodurch die Wärmeabgabe zielgerichtet linienförmig in die Oberfläche des Profilkörpers 18 eingeleitet werden kann.

Die Vorrichtung 10 weist weiter Einrichtungen zur Entfernung von Eis und/oder zur Vermeidung einer Eisansammlung in oder an den durch die Wärmeabgabelinie 28 beziehungsweise Stagnationslinie 34 geteilten Abschnitten 38, 39 des Oberflächenbereich 14 auf.

Bei einer möglichen Ausgestaltung ist eine Verformungseinrichtung 40 zur Verformung von entsprechenden Teilen oder Abschnitten 38, 39 des Oberflächenbereichs 14 vorgesehen.

Bei einer anderen möglichen Ausgestaltung ist an dem Oberflächenbereich 14 eine Oberflächenbeschichtung 42 zur Verminderung von Eisadhäsionskräften vorgesehen.

Besonders bevorzugt sind sowohl die Verformungseinrichtung 40 als auch die die Eisadhäsionskräfte herabsetzende Oberflächenbeschichtung 42 vorgesehen, wie dies bei der in Fig. 2 gezeigten Ausführungsform der Fall ist.

Die Vorrichtung 10 ist gemäß einer bevorzugten Ausgestaltung als hybrides Enteisungssystem 44 ausgebildet, das eine Eisentfernung oder Vermeidung von Eisbildung unter Einsatz von wenigstens zwei Prinzipien durchführt.

Die Wärmeabgabeeinrichtung 12 ist vorzugsweise durch ein elektro-thermisches System 46 ausgebildet, das als Subsystem des hybriden Enteisungssystems 44 ausgebildet ist.

Die Wärmeabgabeeinrichtung 12 weist in einer bevorzugten Ausgestaltung als Wärmequelle 13 einen Heizdraht 48 zur definierten Bildung einer Sollbruchstelle an der Stagnationslinie 34 des Profils 36 auf.

Wie insbesondere aus Fig. 2 ersichtlich, wird hierzu zum Aufbauen der Vorrichtung 10 im Bereich der Vorderkante 26 des Profilkörpers 18, der beispielsweise zum Bilden des Flügels 22 oder zum Bilden von Leitwerksflossen 24 dient, der elektro-thermische Heizdraht 48 entlang der Stagnationslinie 34 des Profils 36 eingebaut. In bevorzugter Ausgestaltung wird der Heizdraht 48 in eine Matrix aus Befestigungsmaterial, wie insbesondere eine Epoxidharzmatrix 50, eingebettet. Anstelle der Verwendung einer Einbettungsmatrix kann der Heizdraht 48 auch mit einem dünnen Folienkleber an der Innenseite des Profils 36 befestigt werden. Als bevorzugter Heizdraht 48 ist ein einadriger Mantelheizleiter mit schlankem, kreisrunden Querschnitt eingesetzt. Alternativ kann auch eine Kohlefaserkordel (nicht dargestellt) als Heizelement verwendet werden. Diese kann z.B. mit Epoxidharz getränkt sein und zur elektrischen Isolierung z.B. mit Glaslagen umwickelt sein.

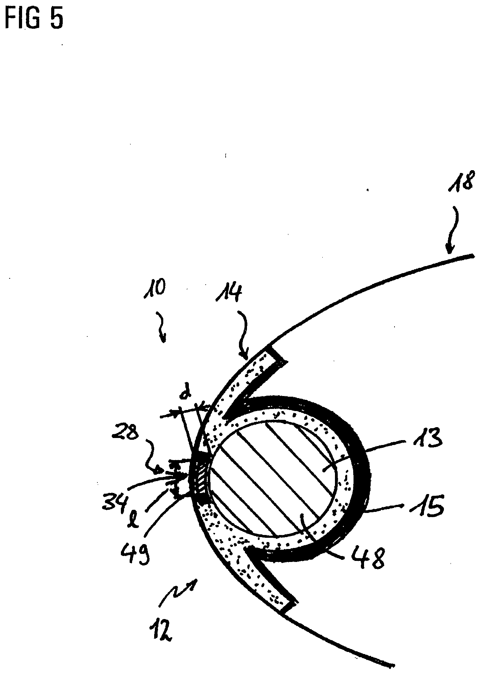

Wie insbesondere in Fig. 5 ersichtlich ist der Heizdraht 48 von einer Isolierummantelung 15 umschlossen. In bevorzugter Ausgestaltung wird die Isolierummantelung 15 aus einem isolierenden Material realisiert, und in explizit bevorzugter Gestaltung wird die Ummantelung aus Kapton ausgeführt. Eine Aussparung der Isolierummantelung wird lediglich im Bereich der Klebung - Klebeverbindung 49 - vollzogen, die den Heizdraht 48 mit der Innenseite der Oberfläche des Profilkörpers stoffschlüssig verbindet.

Demnach umgibt die Isolierummantelung 15 die Wärmequelle 13 auf ihrem gesamten Umfang mit Ausnahme des schmalen Bereichs, wo die Wärmequelle 13 vorzugsweise stoffschlüssig mit der Innenseite des Profilkörpers 18 verbunden ist. In diesem Verbindungsbereich ist die Isolierummantelung schlitzförmig ausgespart.

Wie weiter in Fig 5 ersichtlich weist die Klebeverbindung 49 in bevorzugter Gestaltungsweise um den Staupunkt - Stagnationsline 34 - des Profilkörpers 18 eine Länge I in einem Bereich zwischen 0,5 mm und 1,5 mm, und in einer explizit guten Gestaltungsweise eine Länge von etwa 0.8 mm auf. Die Dicke d der Klebeverbindung 49 weist in bevorzugter Gestaltungsweise 0.2 mm auf.

Durch die Aussparung der Isoliermantelung 15 und die hier vorgesehenen Klebeverbindung wird der linienförmige Wärmeabgabebereich - Wärmeabgabeline 28 - definiert und begrenzt. So lässt sich eine auf einen sehr schmalen Bereich von weniger als 5 mm, vorzugsweise zwischen 0,2 mm und 4 mm, mehr bevorzugt zwischen 0,5 mm und 1,5 mm und am meisten bevorzugt von etwa 0,8 mm bis etwa 1,0 mm begrenzte Wärmeabgabe erreichen.

Anstelle des Heizdrahtes 48 kann die Wärmeabgabeeinrichtung 12 jedoch auch einen Piezoaktuator nutzen, der beispielsweise hochfrequent angesteuert wird und somit sowohl thermische als auch mechanische Energie abgibt. Ein solcher Piezoaktuator der hier nicht näher dargestellten weiteren Ausgestaltung ohne Heizdraht 48 sollte so ausgebildet sein, dass er die Wärme entlang der Wärmeabgabelinie 28 derart abgibt, dass eine Sollbruchstelle ausgebildet wird. Auch hier ist eine definierte Wärmeabgabe begrenzt auf eine Wärmeabgabelinie mit der oben angegebenen bevorzugten Breite (entspricht Länge I der Klebeverbindung 49) vorgesehen.

In weiter bevorzugter Ausgestaltung weist die Vorrichtung 10 neben der Wärmeabgabeeinrichtung 12 auch ein elektro-mechanisches Enteisungssystem 52 als weiteres Subsystem des hybriden Enteisungssystems 44 auf. Das elektro-mechanische Enteisungssystem 52 kann als ein Beispiel für die Verformungseinrichtung 40 angesehen werden. Vorzugsweise weist das elektro-mechanische Enteisungssystem 52 wenigstens einen Piezoaktuator 54 auf.

Besonders bevorzugt weist die Verformungseinrichtung 40 und deren elektro-mechanisches Enteisungssystem 52 eine erste Verformungseinheit 56 und eine zweite Verformungseinheit 57 auf. Die erste Verformungseinheit 56 dient zur Verformung eines ersten Abschnitts 38 des Oberflächenbereichs 14 auf einer ersten Seite der Wärmeabgabelinie 28. Bei dem in Fig. 2 dargestellten Beispiel, wo der Profilkörper 18 ein Teil des Flügels 22 ist, ist der erste Abschnitt 38 beispielsweise der oberhalb der Stagnationslinie 34 liegende Abschnitt des die Vorderkante 26 einschließenden Oberflächenbereichs 14. Dementsprechend wäre der zweite Abschnitt 39, der durch die zweite Verformungseinheit 57 zu verformen ist, in dem dargestellten Beispiel der unterhalb der Stagnationslinie 34 gelegene Abschnitt des Vorderkanten-Oberflächenbereichs 14.

Dementsprechend weist das elektro-mechanische Enteisungssystem 52 vorzugsweise wenigstens zwei Piezoaktuatoren 54, 55 auf, nämlich wenigstens einen ersten Piezoaktuator 54 für die erste Verformungseinheit 56 und wenigstens einen zweiten Piezoaktuator 55 für die zweite Verformungseinheit 57.

Dementsprechend ist zum Beispiel zum Aufbau eines elektro-mechanischen Enteisungssystems 52 der Einbau von wenigstens zwei Piezoaktuatoren 54, 55 im Bereich einer Vorderkante 26 eines aerodynamischen Profils 36, wie beispielsweise dem Profilkörper 18 eines Flügels 22, einer Leitwerksflosse oder eines Triebwerkseinlaufes 25, vorgesehen. Die Piezoaktuatoren 54, 55 liegen in Strömungsrichtung hinter dem durch den Heizdraht 48 definierten linienförmigen Wärmeabgabebereich - Wärmeabgabelinie 28. Sie dienen damit zur Entfernung von Eisakkumulationen hinter dem Staupunkt des Profils 36 und zur Entfernung von Eisanlagerungen aus zurücklaufenden und erstarrenden Tropfen durch das elektro-thermische System 46.

Als Piezoaktuatoren 54, 55 können insbesondere D33-Aktuatoren, beispielsweise mit einer Länge von ca. 30 mm, einer Breite von ca. 10 mm und einer Höhe von ca. 2 mm eingesetzt werden. Für nähere Einzelheiten in Bezug auf den Aufbau und einer möglichen Anordnung der Piezoaktuatoren wird ausdrücklich auf die WO 2007/071231 A1 verwiesen.

Um für eine möglichst effiziente mechanische Einkopplung in die Struktur zu sorgen, sind für die bevorzugten, z.B. quaderförmigen Piezoaktuatoren 54, 55 ebene Flächen zur Applikation auf der Innenseite des Profils 36 vorzusehen. Die bevorzugten, quaderförmigen Piezoaktuatoren 54, 55 sind insbesondere vorteilhaft, da sie als kostengünstige Standardbauteile erhältlich sind. Alternativ können auch formangepasste Piezoaktuatoren verwendet werden, welche die gleiche gekrümmte Kontur wie das Profil 36 vorweisen, um für eine möglichst effiziente mechanische Einkopplung in die Stuktur zu sorgen.

Die Vorrichtung 10 zur Enteisung und/oder Vermeidung von Eisbildung weist in der bevorzugten Ausgestaltung als hybrides Enteisungssystem 44 vorzugsweise auch eine Einrichtung zur Verminderung der Eisadhäsion an dem Oberflächenbereich 14 auf. Diese Einrichtung kann als weiteres Subsystem zur Enteisung angesehen werden. Insbesondere weist diese Einrichtung die Oberflächenbeschichtung 42 auf.

In bevorzugter Ausgestaltung wird der Oberflächenbereich 14 um die Vorderkante 26 des aerodynamischen Profils 36 oder zum Beispiel ein gesamter Oberflächenbereich des Profilkörpers 18 - beispielsweise der Flügel 22 - derart beschichtet und/oder strukturiert, dass die Oberfläche minimale Adhäsionseigenschaften zwischen Eis (oder Wasser) und Profiloberfläche aufweist. Beispielsweise ist als Profilkörper 18 ein NACA-0012-Aluminium-Flügelprofil mit einer nano-strukturierten, superhydrophoben Oberflächenstrukur oder Oberflächenbeschichtung 42 im Bereich der Vorderkante 26 (z.B. Hydrobead) vorgesehen.

Zum Beispiel wird folgendes Verfahren zum Anpassen einer ultra-glatten Oberfläche mit einer nanostrukturierten hydrophoben Morphologie angewandt, welches sich in drei Schritte gliedern lässt:
1) Spiegelglattes Polieren einer aus einer Aluminiumlegierung gebildeten Struktur
2) Ausbilden einer nanoporösen Alumniumoxidschicht durch Phosphorsäure-/Schwefelsäureanodisieren (PSA) und
3) Oberflächenhydrphobisierung.

Im Schritt 1) werden die Aluminiumlegierungs-Oberflächen soweit poliert, bis sie eine ultraglatte Spiegelfläche bilden. Das PSA-Verfahren wird zum Beispiel mit Spannungen im Bereich von 16 bis 26 Volt und bei Temperaturen zwischen 18 und 35°C durchgeführt. Im Schritt 3) werden die durch das Anodisieren stehen gelassenen Spitzen der nanoporösen Alumniumoxidoberfläche mit einem Hydrophibisationsmittel behandelt. Beispielsweise kommen hier industriell erhältliche Mittel wie z.B. "Episurf"-Lösung von Surfactis Technologies im Tauchverfahren zum Einsatz, oder auch Chemikalien wie beispielsweise Trichloro(1H,1H,2H,2H-perfluorooctyl)silane von Sigma Aldrich, die in bevorzugter Ausführungsweise durch einen Verdampfungsprozess in einem Exsikkator auf der polierten nanostrukturierten Aluminiumoberfläche abgeschieden werden. Das Verfahren zur Herstellung sowie Verwendung einer polierten nanostrukturierten metallischen Oberfläche mit wasser- und eisabweisenden Eigenschaften ist in der Patentanmeldung P700750-DE-NP spezifiziert.

Fig. 2 zeigt demnach die bevorzugte Ausgestaltung der Vorrichtung 10 mit der mit dem Heizdraht 48 entlang der Stagnationslinie 34 versehenen Wärmeabgabeeinrichtung 12 als elektro-thermischem System 46, mit der mit Piezoaktuatoren 54, 55 gebildeten ersten und zweiten Verformungseinheit 56, 57 zum Verformen eines ersten Abschnitts und eines zweiten Abschnitts 38, 39 des Oberflächenbereichs 14 gebildeten Verformungseinrichtung 40 als elektro-mechanischem Enteisungssystem 52 und mit der Oberflächenbeschichtung 42 als weiterem Subsystem des hybriden Enteisungssystems 44.

Im Folgenden wird eine Funktionsweise eines derartigen hybriden Enteisungssystems 44 anhand der Darstellungen in den Fig. 3 und 4 näher erläutert.

Fig. 3 zeigt die Prinzipskizze des aerodynamischen Profils 36 am Beispiel des Profils des Flügels 22 mit einer vollständig durch Eis 30 bedeckten Vorderkante 26. Der angedeutete Heizdraht 48, welcher auf der Innenseite des Profils 36 auf Höhe der Stagnationslinie 34 aufgeklebt ist, wurde bei diesem Beispiel zu keiner Zeit elektro-thermisch beheizt. Selbst wenn nun durch Ansteuerung der angedeuteten piezoelektrischen Aktuatoren 54, 55 eine Bindung in der Grenzschicht zwischen Eis und der Oberfläche im Oberflächenbereich 14 des Profils 36 aufgebrochen wird, verbleibt die die Vorderkante 26 des Profils 36 umschließende Eisschicht dennoch an gleicher Stelle, da die aerodynamischen Kräfte der Strömung - dargestellt durch den Geschwindigkeitsvektor v - die Eisschicht weiterhin an die Vorderkante 26 des Profils 36 anpressen.

Dagegen zeigt die Fig. 4 eine Prinzipskizze des Profils 36 des beispielsweise den Flügel 22 bildenden Profilkörpers 18 mit - z.B. permanent - betriebenem Heizdraht 48, welcher auf der Innenseite des Profils 36 auf Höhe der Stagnationslinie 34 aufgeklebt ist. Das in zweidimensionaler Betrachtung punktuelle beziehungsweise in dreidimensionaler Betrachtung linienförmige Einbringen thermischer Energie generiert eine Sollbruchstelle beziehungsweise eine Sollbruchlinie 32, welche dem Zweck der Partitionierung beziehungsweise Aufspaltung der Akkumulation von Eis 30 an der Stagnationslinie 34 des Profils 36 des Flügels 22 in einen oberen Anteil 60 und einen unteren Anteil 61 der Eisschicht dient. Allgemeiner gesehen wird das Eis 30 entlang der Sollbruchlinie 32 in einen ersten Anteil 60 und einen zweiten Anteil 61 aufgeteilt. Dadurch können beide Eisanteile 60, 61 durch die angedeuteten piezoelektrischen Aktuatoren 54, 55 entfernt werden.

Wie in den Fig. 4 und 5 ersichtlich weist die Wärmabgabeeinrichtung 12 die längliche Wärmequelle 13, wie insbesondere den Heizdraht 48, und eine Isolierummantelung für die Wärmequelle 13 auf. Die Wärmequelle 13 ist von der Isolierummantelung 15 umschlossen, wodurch eine Wärmeabgabe außerhalb der Wärmabgabelinie 28 vermieden wird. Insbesondere wird eine Wärmeabgabe in den Innenbereich des Profilkörpers 18 verhindert und zudem ein Wärmestau innerhalb der Isolierummantelung erzeugt. Somit kann die Wärmeabgabe zielgerichtet in die Oberfläche des Profilkörpers 18 eingeleitet werden. Im Wesentlichen wird die gesamte thermische Energie linienförmig an der Wärmeabgabelinie 28 abgegeben, um so die Sollbruchstelle bzw. die Sollbruchlinie 32 zu erzeugen und das Eis 30 aufzuteilen. Dadurch ist nur eine sehr geringe Menge an thermischer Energie erforderlich.

Dabei ist es ausreichend, wenn das Eis 30 in einem Bereich zwischen 0,5 mm und 1,5 mm aufgespalten wird. In besonders bevorzugter Ausgestaltung erfolgt eine Aufspaltung entlang einer Sollbruchlinie 32 mit einer Linienbreite von etwa 1 mm. Dann können beide aufgespaltenen Eisanteile durch Verformung der Oberfläche des Profilköpers 18 mechanisch entfernt werden.

Die anhand den Fig. 3 und 4 ersichtliche Funktionsweise des hybriden Enteisungssystems 44 wird hiernach noch in näheren Einzelheiten am Beispiel einer möglichen Ausgestaltung eines - beispielsweise mit der Vorrichtung 10 durchführbaren - Verfahrens zur Enteisung oder zur Vermeidung von Eisbildung an Luftfahrzeugen näher erläutert.

Durch die Verwendung zum Beispiel eines Heizdrahtes 48 an der Stagnationslinie 34 des Profils 36 eines Flügels 22, einer Flosse, eines Triebwerkseinlaufes oder dergleichen, welcher Heizdraht 48 auf die Innenseite des Profils 36 aufgeklebt ist, wird thermische Energie in Spannweitenrichtung linienförmig an das Profil 36 übertragen. Allgemeiner erfolgt eine Wärmeabgabe einer Wärmeabgabeeinrichtung 12 bei dreidimensionaler Betrachtung linienförmig beziehungsweise punktuell bei zweidimensionaler Betrachtung wie in Fig. 4 dargestellt. Dies bedingt ein Aufschneiden der die Vorderkante 26 umschließenden Schicht Eis 30 und kann als bewusstes Einbringen einer Sollbruchstelle oder Sollbruchlinie 32 angesehen werden, welche dem Zweck der Partitionierung der Eisakkumulation in eine erste und eine zweite Eishälfte - zum Beispiel in eine obere Eishälfte und eine untere Eishälfte - dient.

Von besonderem Vorteil ist die gemeinsame Verwendung eines Heizdrahtes 48 zum Bilden des hybriden Enteisungssystems 44 in Kombination mit einer Verformung eines Oberflächenbereichs 14 des Profils 36 durch piezoelektrische Aktuatoren 54, 55.

Verzichtet man auf den Einsatz des Heizdrahtes 48, sind die Piezoaktuatoren 54, 55 zwar in der Lage, die Oberfläche des Profils 36 des Flügels 22 zu verformen und somit die Bindung in der Grenzfläche von Eis und Oberfläche aufzubrechen. Das von der Oberfläche gelöste Eis 30 wird jedoch aufgrund des aerodynamischen Staudrucks der Anströmung weiterhin an das Profil 36 des Flügels 22 angepresst. Somit wird der Oberflächenbereich 14 nicht final von Eisakkumulation befreit - siehe Fig. 3. Durch die Partitionierung in mehrere Abschnitte oder Anteile 60, 61, zum Beispiel eine obere und eine untere Eishälfte, mit der Wärmeabgabeeinrichtung 12, beispielsweise mittels des Heizdrahtes 48, wird ein mögliches Problem eines Anpressens des Eises 30 an das Profil 36 umgangen - siehe hierzu Fig. 4 - und man kann sich zusätzlich den Effekt der aerodynamischen Anströmung des Profils 36 und der dadurch auf das Eis 30 wirkenden Kräfte zunutze machen.

Somit dient der Heizdraht 48 - im Gegensatz zu elektro-thermischen Systemen oder Wärmeabgabeeinrichtungen 102, die mit Heizmatten 110 arbeiten - nicht zur großflächigen thermischen Entfernung von Eisakkumulationen auf dem aerodynamischen Profil 36, wie beispielsweise des Flügels 22, sondern zum linienförmigen Aufbrechen der Eisschicht.

Dementsprechend weist ein zum Beispiel mit der Vorrichtung 10 durchführbares Verfahren zur Enteisung eines Oberflächenbereichs 14 eines Luftfahrzeuges 16 und/oder zum Vermeiden von Eisbildung an dem Oberflächenbereich 14 des Luftfahrzeuges 16 den Schritt Einbringung von Wärme entlang einer Linie an dem Oberflächenbereich 14 auf, um eine Sollbruchlinie 32 in sich an dem Oberflächenbereich 14 ansammelndem Eis 30 oder eine Trennlinie in sich an dem Oberflächenbereich ansammelnden Eis oder in sich an dem Oberflächenbereich akkumulierenden Wassertropfenansammlungen zu bilden.

Unter geschickter Ausnutzung der Anströmung kann so eventuell durch das Aufbrechen von Eis entlang einer Sollbruchlinie eine Eisentfernung stattfinden.

Mehr bevorzugt wird das Einbringen von Wärme entlang einer Wärmeabgabelinie 28 zum Bilden einer Sollbruchlinie 32 oder Trennlinie entlang einer Stagnationslinie 34 eines aerodynamischen Profils 36 durchgeführt.

Mehr bevorzugt weist das Verfahren weiter noch wenigstens einen der Schritte Verformen des Oberflächenbereichs 14, um Eis entlang der Sollbruchlinie 32 aufzubrechen und/oder um entlang der Sollbruchlinie 32 aufgebrochenes Eis oder sich auf den Seiten der Trennlinie akkumulierende Wasseransammlungen zu entfernen und/oder Vorsehen eines Oberflächenbereichs 14 mit einer Eisadhäsionskräfte herabsetzenden Oberflächenbeschaffenheit - insbesondere mittels einer entsprechenden Oberflächenbeschichtung 42 - auf.

In bevorzugter Ausgestaltung wird der Heizdraht 48 des elektro-thermischen Systems 46 im permanenten Running-Wet-Anti-Icing-Modus betrieben. Für einen niedrigeren Energieverbrauch kann der Heizdraht aber auch alternativ im zyklischen De-Icing-Modus betrieben werden, um das Entfernen der voneinander getrennten Anteile 60, 61 von Eis 30 auf dem Profil 36 mittels der Verformungseinrichtung 40 zu ermöglichen.

Die Verformung des Oberflächenbereich 14 erfolgt vorzugsweise durch Piezoaktuatoren 54, 55. Insbesondere erfolgt die Verformung der Oberfläche des Profils 36 durch Ansteuerung der Piezoaktuatoren 54, 55 im Bereich der Resonanzfrequenz der Struktur - hier wird vorzugsweise eine niedrige Ansteuerspannung bei einer Aufsetzspannung von 0 V eingesetzt - oder durch eine quasi-statische Anregung der Piezoaktuatoren - hier wird eine hohe Amplitude bei einer Aufsetzspannung >0 V vorzugsweise eingesetzt -, wodurch die Eisakkumulationen im Bereich in Strömungsrichtung hinter der Stagnationslinie 34 des Profils 36 entfernt werden.

Eine weitere mögliche Ansteuerung liegt in einer kontinuierlichen, dynamischen Ansteuerung der piezoelektrischen Aktuatoren 54, 55 mit einem Rechtecksignal mit definierter Flankensteilheit bei einer Wiederholfrequenz von beispielsweise 1 Hz. Über das Rechtecksignal wird die Flügelstruktur in Resonanz versetzt, dieser Effekt wirkt sich zu der statischen Auslenkung weiter positiv auf das Abplatzen des Eises 30 aus.

Bei Einbau von beispielsweise zwei oder mehreren Piezoaktuatoren 54, 55 jeweils auf dem ersten und dem zweiten Abschnitt 38, 39 des Profils 36 - beispielsweise auf der Oberseite und der Unterseite des Profils 36 des Flügels 22 - besteht des Weiteren die Möglichkeit, die Aktuatoren 54, 55 einzeln anzusteuern, um eine beliebige Schwingungsform auf der Oberfläche des Profils 36 zu erzeugen, beispielsweise eine Art Welle quer zur Oberfläche des Oberflächenbereichs 14.

Die Bewegungsrichtung der Piezoaktuatoren 54, 55 kann in Spannweitenrichtung oder Flugrichtung (D33-Effekt) oder flächig (D31-Effekt) erfolgen.

In einer alternativen, hier nicht näher dargestellten Ausführungsform kann die Resonanzverformung auch durch Verwendung eines Inertialkraftgenerators oder eines Inertialmassenschwingers realisiert werden. Beispiele für hierzu verwendbare Inertialkraftgeneratoren oder Inertialmassenschwinger sind in der WO2007073820A1, der EP01963704B1, der EP0907036A2, der US020050285477A1, der US020080316671A1, der US020050280332A1, der US000006411009B2 und insbesondere in der deutschen Patentanmeldung DE10 2014 110 753.5, auf die für weitere Einzelheiten ausdrücklich verwiesen wird, erläutert. Es können auch Kombinationen aus wenigstens einem piezoelektrischen Aktuator und wenigstens einem Inertialkraftgenerator und/oder Inertialmassenschwinger vorgesehen sein.

Durch die eisphoben Eigenschaften einer super-hydrophoben Beschichtung 42 werden die adhäsiven Bindungskräfte zwischen Eis 30 und der Oberfläche des Profils 36 auf ein Minimum reduziert. Dadurch wird eine energie-effiziente Entfernung aller Eisakkumulationen an dem Profil 36 ermöglicht.

Zum Funktionsnachweis wurde ein Vereisen eines Profils 36 des Flügels 22 unter realen Flugbedingungen in einem Vereisungswindkanal in Labormaßstab durchgeführt. Durch Verwendung aller drei Subsysteme des hybriden Enteisungssystems 44 wurden alle auf dem Flügelprofil anhaftenden Eisakkumulationen entfernt. Die drei Subsysteme wurden dabei gleichzeitig eingesetzt. Ein Vergleich des Energiebedarfs des hybriden Enteisungssystems 44 mit einem bereits für den Flugbetrieb zertifizierten Enteisungssystem - insbesondere einem rein elektro-thermischen Enteisungssystem 116 der in den Fig. 6 und 7 gezeigten Art - konnte eine sehr deutliche Energieeinsparung aufzeigen.

In dem eingangs erwähnten Dokument [1] ist beschrieben, dass neben der Fläche, auf welcher der Aufwuchs von Eis durch ein thermisches System verhindert werden soll, die Temperatur der Luftströmung maßgeblich den Wert der verbrauchten Leistung bestimmt.

Für das thermische Subsystem, das in bevorzugter Ausführungsform durch einen kreisrunden Heizdraht mit einem Durchmesser von 1,2 mm realisiert worden ist, konnte der Bereich der durch das Heizelement verbrauchten Leistung in Abhängigkeit von der Temperatur ermittelt werden.

Um in einem Geschwindigkeitsbereich zwischen 90 m/s und 120 m/s eine eisfreie Linie mit einer Breite von 1 mm zu erzeugen, verbrauchte das thermische System eine Leistung pro Spannweite im Bereich zwischen 18,5 W/m und 29,4 W/m. Diese Leistungsdaten zur Verhinderung des Eisaufwuchses an der Stagnationslinie sind auf die Formation von Klareis bezogen, welches sich im Temperaturbereich nahe unterhalb des Gefrierpunkts von Wasser bildet.

Bei Lufttemperaturen, die die Bildung von Raueis begünstigen, konnte die thermische Leistung der Wärmeabgabeeinrichtung in einem Leistungsbereich spannweitig zwischen 209,1 und 452,4 W/m ermittelt werden.

Bei Vergleich der linienförmigen Enteisung mit der hier beschriebenen Wärmeabgabeeinrichtung (z.B. Heizdraht) zu einem thermischen Subsystem [2] aus der Literatur, das eine flächige Entfernung von Eis bzw. ein flächiges Anlösen von Eis auf der Oberfläche eines Profilkörpers vorsieht, wird ersichtlich, dass die linienförmige Enteisung mit dem Heizdraht gegenüber einer flächigen Enteisung mehr als 95 % an thermischer Leistung einspart.

Für die verbrauchte Leistung der mechanischen Verformungseinheit, die in bevorzugter Gestaltungsweise mit piezoelektrischen Aktuatoren ausgeführt ist, kann ebenfalls ein Leistungsbereich angegeben werden, welcher im Gegensatz zu dem thermischen Leistungsbereich als von der Temperatur unabhängig angesehen werden kann. Um den Eisaufwuchs im Bereich stromabwärts der eisfreien Linie mit den Aktuatoren zu entfernen wird eine Leistung pro Spannweite in einem Bereich zwischen 28.6 W/m und 38.1 W/m verbraucht.

Des Weiteren hat sich gezeigt, dass durch die Verwendung der eisabweisenden Oberflächenschicht die minimale Eisdicke, die durch die Verwendung der mechanischen Verformungseinheit entfernt werden kann, reduziert werden kann, wobei die minimal entfernbare Eisdicke als maßgebliches Entwurfskriterium für mechanische Enteisungssysteme angesehen werden kann. Ohne die Beschichtung können durch die Verwendung der mechanischen Verformungseinheit Eisdicken im Durchschnitt von 2,67 mm entfernt werden, und ganz bevorzugt Eisdicken mit einem Minimalwert von 1,85 mm.

Wird die mechanische Verformungseinheit durch die eisabweisende Oberflächenschicht (oder eine entsprechende Oberflächenstrukurierung) unterstützt, wobei durch die eisabweisende Oberflächenschicht die Eishaftung auf der Oberfläche des Profilköpers reduziert wird, so können im Durchschnitt Eisdicken mit einem Wert von 2,03 mm entfernt werden, und in explizit bevorzugter Ausführung lassen sich minimal entfernbare Eisdicken von 1,45 mm realisieren.

Somit können durch die Verwendung der eisabweisenden Oberflächenschicht nochmals eine Energiereduktion von mehr als 21 % bei Vergleich der minimal entfernbaren Eisdicken, bzw. eine Energiereduktion von etwa 24 % bei Vergleich der durchschnittlich entfernbaren Eisdicken erreicht werden.

Vorstehend wurden Ausführungsbeispiele einer Vorrichtung 10 und eines Verfahrens zur Enteisung und/oder Vermeidung von Eisbildung an einem Oberflächenbereich 14 eines Luftfahrzeuges 16 näher erläutert. Die Erfindung ist selbstverständlich nicht auf die einzelnen dargestellten Ausführungsbeispiele beschränkt. Viele Abwandlungen können vorgenommen werden. Insbesondere können die drei Subsysteme auch jeweils einzeln oder in beliebiger Kombination zueinander eingesetzt werden.

Weitere Ausführungsbeispiel sind möglich und denkbar.

Einige Ausführungsbeispiele befassen sich mit einer Erniedrigung der Ausfallwahrscheinlichkeit.

So könnte die Wärmeabgabeeinrichtung 12 zur Sicherstellung der Redundanz eines hybriden Enteisungssystems 44 eine Mehrzahl von Heizdrähten 48 aufweisen.

Beispielsweise könnte ein Heizdraht 48 unmittelbar an der Stagnationslinie 34 vorgesehen sein und weitere Heizdrähte (nicht näher dargestellt) werden im Bereich um die Stagnationslinie 34 angeordnet.

Auch können jeweils mehrere Piezoaktuatoren 54, 55 auf den jeweiligen Abschnitten 38, 39 verwendet werden.

### Bezugszeichenliste:

- 10: Vorrichtung zur Enteisung und/oder Vermeidung von Eisbildung
- 12: Wärmeabgabeeinrichtung
- 13: Wärmequelle
- 14: Oberflächenbereich
- 15: Isolierummantelung
- 16: Luftfahrzeug18 Profilkörper
- 20: Flugzeug
- 22: Flügel
- 24: Leitwerksflossen
- 25: Triebwerkseinlauf
- 26: Vorderkante
- 28: Wärmeabgabelinie
- 30: Eis
- 32: Sollbruchlinie
- 34: Stagnationslinie
- 36: aerodynamisches Profil
- 38: erster Abschnitt
- 39: zweiter Abschnitt
- 40: Verformungseinrichtung
- 42: Oberflächenbeschichtung
- 44: hybrides Enteisungssystem
- 46: elektro-thermisches System
- 48: Heizdraht
- 49: Klebeverbindung
- 50: Epoxidharzmatrix
- 52: elektro-mechanisches Enteisungssystem
- 54: erster Piezoaktuator
- 55: zweiter Piezoaktuator
- 56: erste Verformungseinheit
- 57: zweite Verformungseinheit
- 60: erster Anteil der Eisschicht
- 61: zweiter Anteil der Eisschicht
- 100: Vorrichtung zur Enteisung und/oder Vermeidung von Eisbildung
- 102: Wärmeabgabeeinrichtung
- 104: Oberflächenbereich
- 106: Luftfahrzeug
- 108: Profilkörper
- 110: Heizmatte
- 112: Vorderkante
- 114: Stagnationslinie
- 116: elektro-thermisches Enteisungssystem
- 118: Eis

## Patentansprüche

1. Profilkörper (18) für ein Luftfahrzeug (16) mit einer Vorrichtung (10) zur Enteisung und/oder Vermeidung von Eisbildung, mit einer Wärmeabgabeeinrichtung (12) zur Abgabe von Wärme an einen Oberflächenbereich (14) des Luftfahrzeuges (16), wobei die Wärmeabgabeeinrichtung (12) zur linienförmigen Wärmeabgabe zwecks Erzeugung einer Sollbruchstelle oder Sollbruchlinie (32) oder Trennlinie in sich auf dem Oberflächenbereich ansammelndem Eis ausgebildet ist,
und mit einer Verformungseinrichtung (40) zur Verformung zumindest eines Teils der Oberfläche des Oberflächenbereichs (14),
**dadurch gekennzeichnet, dass** die Wärmeabgabeeinrichtung (12) eine Wärmequelle (13) umfasst, die von einer Isolierummantelung (15) eingefasst ist, die ausgebildet ist, ein Abstrahlen von Wärme in den Innenbereich des Profilkörpers (18) zu verringern oder zu verhindern.

2. Profilkörper (18) nach Anspruch 1, **dadurch gekennzeichnet, dass** die Vorrichtung (10) als hybride Vorrichtung zur Enteisung und/oder Vermeidung von Eisbildung mittels thermischer und mechanischer Energie ausgebildet ist.

3. Profilkörper (18) nach Anspruch 1 oder 2, **dadurch gekennzeichnet, dass** die Verformungseinrichtung (40) umfasst:
a) wenigstens einen piezoelektrischen Aktuator (54, 55) oder eine Anordnung von piezoelektrischen Aktuatoren (54, 55) zur Verformung einer Oberfläche des Oberflächenbereichs; und/oder
b) wenigstens einen Inertialkraftgenerator oder Inertialmasseschwinger und/oder
c) eine erste Verformungseinheit (56) auf einer ersten Seite von einer Wärmeabgabelinie (28) der Wärmeabgabeeinrichtung (12), zur Verformung eines auf der ersten Seite befindlichen ersten Abschnitts (38) des Oberflächenbereichs (14) und eine zweite Verformungseinheit (57) auf der zweiten Seite von der Wärmeabgabelinie (28) zur Verformung eines auf der zweiten Seite befindlichen zweiten Abschnitts (39) des Oberflächenbereichs (14).

4. Profilkörper (18) nach Anspruch 3, **dadurch gekennzeichnet**,
d) dass eine Eisdetektionseinrichtung vorgesehen ist, die ausgebildet ist, anhand einer von durch die Wärmeabgabeeinrichtung (12) und/oder durch wenigstens einen Aktuator (54, 55) erhaltenen Information eine Akkumulation von Eis zu detektieren und/oder
e) dass der wenigstens eine piezoelektrische Aktuator als d₃₃-Stapelaktuator, insbesondere dessen Ausdehungsrichtung in Spannweitenrichtung ausgerichtet ist, ausgebildet ist

5. Profilkörper (18) nach einem der voranstehenden Ansprüche, **gekennzeichnet durch** eine Eisadhäsionskräfte herabsetzende Oberflächenstrukturierung und/oder Oberflächenbeschichtung (42) für den Oberflächenbereich (14).

6. Profilkörper (18) nach einem der voranstehenden Ansprüche, **dadurch gekennzeichnet, dass** die Wärmeabgabeeinrichtung (12) wenigstens eine längliche Wärmequelle (13) aufweist und die Isolierummantelung (15) für die Wärmequelle (13) zum Vermeiden einer Wärmeabstrahlung an einem anderen Bereich als einer Wärmeabgabelinie (28) ausgebildet ist.

7. Profilkörper (18) nach einem der voranstehenden Ansprüche, **dadurch gekennzeichnet, dass** die Wärmeabgabeeinrichtung (12) wenigstens einen Heizdraht (48) und/oder wenigstens einen piezoelektrischen Aktuator (54, 55), der derart ausgebildet und eingerichtet ist, dass er zur linienförmigen Wärmeabgabe fähig ist, aufweist.

8. Profilkörper (18) nach einem der voranstehenden Ansprüche, **dadurch gekennzeichnet, dass** ein die Stagnationslinie (34) und/oder die Vorderkante (26) des Profilkörpers (18) einschließender Oberflächenbereich (14) mit einer Eisadhäsionskräfte herabsetzenden Oberflächenbeschichtung (42) versehen ist.

9. Profilkörper (18) nach Anspruch 8, **dadurch gekennzeichnet, dass** der Oberflächenbereich (14) mit einer nanostrukturierten Oberfläche und/oder einer superhydrophoben Oberfläche versehen ist.

10. Luftfahrzeug (16) mit einem aerodynamischen Profilkörper (18) nach einem der Ansprüche 1 bis 9.

11. Verfahren zur Enteisung eines Oberflächenbereichs (14) eines Luftfahrzeugs (16) und/oder Vermeidung von Eisbildung an dem Oberflächenbereich (14) des Luftfahrzeuges (16), durch Einbringung von Wärmeenergie an dem Oberflächenbereich (14), durch Einbringung von Wärme entlang einer Linie an dem Oberflächenbereich (14), um eine Sollbruchlinie (32) oder Trennungslinie in sich an dem Oberflächenbereich (14) ansammelndem Eis oder in sich an dem Oberflächenbereich (14) akkumulierenden Wassertropfenansammlungen zu bilden und durch Verformen des Oberflächenbereichs (14), um Eis entlang der Sollbruchlinie (32) aufzubrechen und/oder um entlang der Sollbruchlinie (32) oder Trennlinie aufgebrochenes Eis und/oder Wassertropfen zu entfernen, **dadurch gekennzeichnet, dass** bei der Einbringung von Wärme ein Abstrahlen von Wärme in den Innenbereich des Profilkörpers (18) durch eine Isolierummantelung (15) verringert oder verhindert wird.

12. Verfahren nach Anspruch 11,
**gekennzeichnet durch** Versehen oder Vorsehen des Oberflächenbereichs (14) mit einer Eisadhäsionskräfte herabsetzenden Oberflächenbeschichtung (42) und/oder einer Eisadhäsionskräfte herabsetzenden Oberflächenbeschaffenheit.

## Claims

1. Profiled body (18) for an aircraft (16), comprising a device for de-icing and/or avoiding ice-buildup, a heat dissipation device (12) for dissipating heat to a surface region (14) of said aircraft (16), wherein said heat dissipation device (12) is constructed for linear heat dissipation for the purpose of producing a predetermined breaking point or breaking line (32) or separation line within ice accumulating on said surface region, and a deformation device (40) for deforming at least a part of the surface of said surface region (14),
**characterized in that** said heat dissipation device (12) comprises a heat source (13) that is surrounded by an insulating sheath (15) operable to reduce or prevent heat from being radiated into the interior region of said profiled body (18).

2. Profiled body (18) according to claim 1, **characterized in that** the device (10) is formed by a hybrid device for de-icing and/or avoiding ice-buildup by means of thermal or mechanical energy.

3. Profiled body (18) according claim 1 or 2, **characterized in that** said deformation device (40) comprises:
a) at least one piezoelectric actuator (54, 55) or an array of piezoelectric actuators (54, 55) for deforming a surface of said surface region; and/or
b) at least one inertial force generator or inertial mass vibrator and/or
c) a first deformation unit (56) on a first side of a heat dissipation line (28) of said heat dissipation device (12), for deforming a first portion (38) of said surface region (14) situated on the first side, and a second deformation unit (57) on the second side of said heat dissipation line (28), for deforming a second portion (39) of said surface region (14) situated on the second side.

4. Profiled body (18) according to claim 3, **characterized in that**
d) a first ice detection device is provided which is operable to detect an accumulation of ice based on information received through at least said heat dissipation device (12) and/or at least one actuator (54,55), and/or
e) that the at least one piezoelectric actuator is configured as a d₃₃ stack actuator the expansion direction thereof is particularly oriented in the wingspan direction.

5. Profiled body (18) according to one of the preceding claims, **characterized by** an ice adhesion forces-reducing surface texturing and/or surface coating (42) for said surface region (14).

6. Profiled body (18) according to one of the preceding claims, **characterized in that** said heat dissipation device (12) at least comprises an elongate heat source (13) and that said insulation sheath (15) for said heat source (13) is operable to avoid heat from being radiated in an area other than said heat dissipation line (28).

7. Profiled body (18) according to one of the preceding claims, **characterized in that** said heat dissipation device (12) at least comprises a heating wire (48) and/or at least a piezoelectric actuator (54, 55) constructed and arranged in a manner such as to be capable of linear heat dissipation.

8. Profiled body (18) according to one of the preceding claims, **characterized in that** a surface region (14) including the stagnation line (34) and/or the leading edge (26) of said profiled body (18) is provided with an ice adhesion forces-reducing surface coating (42).

9. Profiled body (18) according to claim 8, **characterized in that** said surface region (14) is provided with a nanostructured surface and/or a super hydrophobic surface.

10. Aircraft (16), comprising an aerodynamic profiled body (18) according to one of the claims 1 to 9.

11. Method for de-icing a surface region (14) of an aircraft (16) and/or avoiding ice-buildup on the surface region (14) of said aircraft (16) by the introduction of heat energy on said surface region (14), by the introduction of heat along a line on said surface region (14), for creating a predetermined breaking line (32) or separation line in ice that accumulates on said surface region (14) or in water drop collections that accumulate on said surface region (14), and by deforming said surface region (14) for breaking ice along said predetermined breaking line and/or for removing ice broken along said predetermined breaking line (32) or separation line and/or for removing water drops, **characterized in that** when heat is introduced, any radiation of heat into the interior region of said profiled body (18) is reduced or prevented by an insulation sheath (15).

12. Method according to claim 11,
**characterized by** providing said surface region (14) with an ice adhesion forces-reducing surface coating (42) and/or by providing said surface region (14) having an ice adhesion forces-reducing surface quality.

## Revendications

1. Corps profilé (18) pour un aéronef (16) pourvu d'un dispositif (10) destiné au dégivrage et/ou à prévenir la formation de glace, comportant un moyen de dissipation de chaleur (12) pour dissiper de la chaleur à une zone de surface (14) de l'aéronef (16), le moyen de dissipation de chaleur (12) étant conçu pour la dissipation de chaleur linéaire en vue de générer un emplacement destiné à la rupture ou une ligne destinée à la rupture (32) ou encore une ligne de séparation dans la glace qui s'accumule sur la zone de surface, et comportant un moyen de déformation (40) destiné à déformer au moins une partie de la surface de la zone de surface (14),
**caractérisé en ce que** le moyen de dissipation de chaleur (12) comprend une source de chaleur (13) qui est entourée par une enveloppe isolante (15) qui est conçue pour réduire ou empêcher une irradiation de chaleur dans la zone intérieure du corps profilé (18).

2. Corps profilé (18) selon la revendication 1, **caractérisé en ce que** le dispositif (10) est réalisé sous forme de dispositif hybride pour le dégivrage et/ou la prévention de formation de glace au moyen d'une énergie thermique et mécanique.

3. Corps profilé (18) selon la revendication 1 ou 2, **caractérisé en ce que** le dispositif de déformation (40) comprend :
a) au moins un actionneur piézoélectrique (54, 55) ou un agencement d'actionneurs piézoélectriques (54, 55) pour déformer une surface de la zone de surface ; et/ou
b) au moins un générateur de force inertielle ou un oscillateur de masse inertielle ; et/ou
c) une première unité de déformation (56) sur un premier côté d'une ligne de dissipation de chaleur (28) du moyen de dissipation de chaleur (12), pour déformer une première portion (38) de la zone de surface (14) située sur le premier côté et une seconde unité de déformation (57) sur le second côté de la ligne de dissipation de chaleur (28), pour déformer une seconde portion (39) de la zone de surface (14) située sur le second côté.

4. Corps profilé (18) selon la revendication 3, **caractérisé en ce que**
d) il est prévu un moyen de détection de glace qui est conçu pour détecter une accumulation de glace en se basant sur une information reçue par le moyen de dissipation de chaleur (12) et/ou par au moins un actionneur (54, 55), et/ou
e) ledit au moins un actionneur piézoélectrique est réalisé sous forme d'actionneur du type d₃₃, en particulier sa direction d'extension est orientée en direction de l'envergure.

5. Corps profilé (18) selon l'une des revendications précédentes, **caractérisé par** une structuration de surface et/ou par un revêtement de surface (42) pour la zone de surface (14), qui réduit les forces d'adhésion de glace.

6. Corps profilé (18) selon l'une des revendications précédentes, **caractérisé en ce que** le dispositif de dissipation de chaleur (12) comprend au moins une source de chaleur oblongue (13) et l'enveloppe isolante (15) pour la source de chaleur (13) pour éviter une irradiation de chaleur est réalisée dans une zone autre que celle d'une ligne de dissipation de chaleur (28).

7. Corps profilé (18) selon l'une des revendications précédentes, **caractérisé en ce que** le dispositif de dissipation de chaleur (12) comprend au moins un fil de chauffage (48) et/ou au moins un actionneur piézoélectrique (54, 55) qui est réalisé et conçu de manière à être capable de dissiper de la chaleur sous forme linéaire.

8. Corps profilé (18) selon l'une des revendications précédentes, **caractérisé en ce qu'**une zone de surface (14) comprenant la ligne de stagnation (34) et/ou le bord d'attaque (26) du corps profilé (18) est pourvu d'un revêtement de surface (42) qui réduit les forces d'adhésion de glace.

9. Corps profilé (18) selon la revendication 8, **caractérisé en ce que** la zone de surface (14) est pourvue d'une surface nanostructurée et/ou d'une surface superhydrophobe.

10. Aéronef (16) comportant un corps profilé (18) aérodynamique selon l'une des revendications 1 à 9.

11. Procédé de dégivrage d'une zone de surface (14) d'un aéronef (16) et/ou de prévention de formation de glace sur la zone de surface (14) de l'aéronef (16) par application d'énergie thermique sur la zone de surface (14), par application de chaleur le long d'une ligne sur la zone de surface (14), afin de former une ligne destinée à la rupture (32) ou une ligne de séparation dans la glace qui s'accumule sur la zone de surface (14) ou dans les accumulations de gouttes d'eau qui s'accumulent sur la zone de surface (14), et par déformation de la zone de surface (14) pour briser la glace le long de la ligne destinée à la rupture (32) et/ou pour enlever la glace brisée le long de la ligne destiné à la rupture (32) ou de la ligne de séparation, et/ou pour enlever des gouttes d'eau, **caractérisé en ce que** lors de l'application de chaleur, on réduit ou on empêche une irradiation de chaleur dans la zone intérieure du corps profilé (18) par une enveloppe isolante (15).

12. Procédé selon la revendication 11, **caractérisé par** l'agencement ou l'équipement de la zone de surface (14) d'un revêtement de surface (42) qui réduit les forces d'adhésion de glace et/ou d'une propriété de surface qui réduit les forces d'adhésion de glace.
